# EUROPÄISCHE PATENTANMELDUNG

(11) **EP 2 647 519 A1**
(43) Veröffentlichungstag der Anmeldung: **09.10.2013**
(21) Anmeldenummer: 13160312.8
(22) Anmeldetag: 21.03.2013
(51) Int. Cl.: B60K 35/00, B60Q 3/02

(54) **Beleuchtungseinrichtung, Verfahren zur Erzeugen einer Ambientebeleuchtung, und Transportmittel**

(30) Priorität: 02.04.2012 DE 102012006734
(71) Anmelder: SBF Spezialleuchten GmbH, 04316 Leipzig (DE)
(72) Erfinder: Heilmann, Andreas, 04316 Leipzig (DE); Wendt, Sven, 04316 Leipzig (DE)
(74) Vertreter: Söltenfuss, Dirk Christian

(57) **Zusammenfassung**

Eine Beleuchtungseinrichtung für ein Transportmittel, insbesondere ein Schienenfahrzeug, weist wenigstens eine Anzeigevorrichtung (10), welche an einer Passagierkabinendecke des Transportmittels anbringbar ist, und eine Steuervorrichtung (12) zum Ansteuern der wenigstens einen Anzeigevorrichtung (10) auf. Zum Erzeugen einer Ambientebeleuchtung in der Passagierkabine weist diese Beleuchtungseinrichtung wenigstens eine Außenparameter-Erfassungseinrichtung (14, 16, 18) zum Erfassen wenigstens eines Außenparameters in Bezug auf eine aktuelle Sicht von dem Transportmittel nach oben auf und steuert die Steuervorrichtung (12) die wenigstens eine Anzeigevorrichtung (10) in Abhängigkeit von dem wenigstens einen erfassten Außenparameter derart, dass die wenigstens eine Anzeigevorrichtung (10) eine statische oder dynamische Darstellung entsprechend der aktuellen Sicht von dem Transportmittel nach oben anzeigt.

## Beschreibung

Die Erfindung betrifft eine Beleuchtungseinrichtung für ein Transportmittel, insbesondere für eine Passagierkabine eines Schienenfahrzeuges.

Es ist allgemein bekannt, an Passagierkabinendecken Beleuchtungseinrichtungen zum direkten oder indirekten Beleuchtung der Passagierkabine anzubringen.

Die DE 20 2007 006 707 U1 beschreibt eine Ambientebeleuchtung für Fahrzeuge, welche einen Teil des Dachhimmels des Fahrzeuges bildet und welche mit LEDs bestückten Leiterplatten unterschiedliche Lichtszenen wie zum Beispiel einen Sternenhimmel, einen Wolkenhimmel, verschiedene Farbverläufe und dergleichen statisch oder dynamisch am Dachhimmel des Fahrzeuges darstellen kann.

Es ist die Aufgabe der Erfindung, eine verbesserte Beleuchtungseinrichtung für ein Transportmittel zu schaffen, mit welcher eine angenehme Ambientebeleuchtung in einer Passagierkabine des Transportmittels erzeugt werden kann.

Diese Aufgabe wird gelöst durch eine Beleuchtungseinrichtung für ein Transportmittel mit den Merkmalen des Anspruches 1. Besonders bevorzugte Weiterbildungen und Ausgestaltungen der Erfindung sind in den abhängigen Ansprüchen angegeben.

Die erfindungsgemäße Beleuchtungseinrichtung für ein Transportmittel weist wenigstens eine Anzeigevorrichtung, welche an einer Passagierkabinendecke des Transportmittels anbringbar ist, und eine Steuervorrichtung zum Ansteuern der wenigstens einen Anzeigevorrichtung auf. Die Beleuchtungseinrichtung weist zudem wenigstens eine Außenparameter-Erfassungseinrichtung zum Erfassen wenigstens eines Außenparameters in Bezug auf eine aktuelle Sicht von dem Transportmittel nach oben auf. Die Steuervorrichtung steuert die wenigstens eine Anzeigevorrichtung dann in Abhängigkeit von dem wenigstens einen erfassten Außenparameter derart an, dass die wenigstens eine Anzeigevorrichtung eine statische oder dynamische Darstellung entsprechend der aktuellen Sicht von dem Transportmittel nach oben anzeigt.

Mit Hilfe dieser Beleuchtungseinrichtung der Erfindung kann in einer Passagierkabine eines Transportmittels eine Darstellung entsprechend der aktuellen Sicht von dem Transportmittel nach oben angezeigt und so eine angenehme Ambientebeleuchtung geschaffen werden. Den Passagieren in der Passagierkabine kann auf diese Weise das Gefühl eines offenen Dachhimmels (analog einem offenen Cabrio-Kraftfahrzeug) und einer gewissen Weite vermittelt werden. Da erfindungsgemäß Außenparameter bezüglicher der aktuellen Sicht ermittelt werden, passt die auf der wenigstens einen Anzeigevorrichtung angezeigte Darstellung jeweils zur aktuellen Sicht aus den seitlichen Fenstern, sodass die Passagiere ein stimmiges Gesamtbild erfahren.

Die erfindungsgemäße Beleuchtungseinrichtung ist grundsätzlich für alle Arten von Transportmitteln geeignet, besonders vorteilhaft ist sie jedoch in Massentransportmitteln wie Schienenfahrzeugen, Luftfahrzeugen und Wasserfahrzeugen einsetzbar.

Die Beleuchtungseinrichtung weist wenigstens eine Anzeigevorrichtung auf, welche an einer Passagierkabinendecke des Transportmittels angebracht werden kann. Die Anbringung der Anzeigevorrichtung(en) erfolgt vorzugsweise lösbar, kann aber auch unlösbar bzw. dauerhaft sein. Der Begriff "Passagierkabine" umfasst alle Arten von Räumen, in denen sich Passagiere, insbesondere mehrere Passagiere gleichzeitig, in dem jeweiligen Transportmittel aufhalten können. In einer Passagierkabine sind vorzugsweise mehrere Sitzreihen für die Passagiere vorgesehen. Unter dem Begriff der "Passagierkabinendecke" soll in diesem Zusammenhang der obere konstruktive Abschluss der Passagierkabine verstanden werden. Die Anbringung der Anzeigevorrichtung(en) an der Passagierkabinendecke erfolgt vorzugsweise in einem Bereich der Decke, der nicht von anderen Komponenten wie beispielsweise Gepäckablagen, Staufächern, etc. verdeckt ist, bevorzugt oberhalb eines Ganges oder Mittelganges.

Der Begriff "Anzeigevorrichtung" umfasst in diesem Zusammenhang jede Art von Vorrichtung, die geeignet ist, Informationen, insbesondere Bildinformationen optisch darzustellen. Die Anzeigevorrichtung ist bevorzugt eine flächige oder großflächige Anzeigevorrichtung, die vorzugsweise einen gewissen Flächenabschnitt der Passagierkabinendecke überspannt. Grundsätzlich ist die Anzeigevorrichtung beliebig geformt; vorzugsweise hat sie eine im Wesentlichen rechteckige Grundform, sie kann aber auch andere geradlinige und/oder krummlinige Grundformen haben. Ferner ist die Anzeigevorrichtung vorzugsweise im Wesentlichen plan ausgebildet. Alternativ ist die Anzeigevorrichtung vorzugsweise gekrümmt oder gewölbt ausgestaltet, bevorzugt an die Form der Passagierkabinendecke angepasst. Diese Ausführungsform der Anzeigevorrichtung kann das dreidimensionale Raumgefühl für den Passagier weiter verbessern.

Die "aktuelle Sicht von dem Transportmittel nach oben" soll in diesem Zusammenhang bedeuten, dass ein Blick des Passagiers von dem jeweiligen Transportmittel nach oben, d.h. mit einer Hauptblickrichtung in vertikaler Richtung oder mit einer Blickrichtung gegen den Himmel, nachgeahmt wird. Der diesbezügliche "Außenparameter", der von der wenigstens einen Außenparameter-Erfassungseinrichtung erfasst wird, soll in diesem Zusammenhang jede Art von Betriebsparameter bezeichnen, der eine aktuelle Zustandsgröße für die beschriebene aktuelle Sicht unmittelbar oder mittelbar angibt. Zu solchen Außenparametern gehören im Rahmen der Erfindung vorzugsweise Zustandsgrößen wie Helligkeit, Bewölkung, Art und Stärke von Niederschlag, freier Himmel oder Tunneldurchfahrt, und dergleichen.

Die beschriebene aktuelle Sicht kann im Rahmen der Erfindung statisch oder dynamisch angezeigt werden. Die dynamische Anzeige umfasst vorzugsweise in Echtzeit oder zeitlich verzögerte, sich verändernde Anzeigen. Die statische Anzeige umfasst vorzugsweise über einen langen oder kurzen Zeitraum gleichbleibende und sich in regelmäßigen Zeitabständen verändernde Anzeigen.

In einer bevorzugten Ausgestaltung der Erfindung weist die wenigstens eine Außenparameter-Erfassungseinrichtung wenigstens eine Kamera zum Erfassen eines aktuellen Bildes der Sicht von dem Transportmittel nach oben auf. Mit Hilfe einer oder mehrerer Kameras können die Anzeigevorrichtungen an der Passagierkabinendecke die aktuelle und tatsächliche Sicht von dem Transportmittel nach oben in Echtzeit oder mit geringer zeitlicher Verzögerung darstellen. Durch die Kameras werden vorzugsweise automatisch alle relevanten Parameter für die gewünschte realistische Darstellung an der Passagierkabinendecke bereitgestellt.

In einer weiteren bevorzugten Ausgestaltung der Erfindung weist die wenigstens eine Außenparameter-Erfassungseinrichtung zusätzlich oder alternativ wenigstens einen Detektor zum Erfassen der aktuellen Tageszeit und/oder der aktuellen Jahreszeit auf. Anhand von Zustandsgrößen wie Tageszeit und Jahreszeit kann die Steuervorrichtung die aktuelle Helligkeit der beschriebenen Sicht abschätzen und diese wiedergeben oder nachahmen.

In einer noch weiteren bevorzugten Ausgestaltung der Erfindung weist die wenigstens eine Außenparameter-Erfassungseinrichtung zusätzlich oder alternativ wenigstens einen Detektor zum Erfassen der aktuellen Wetter- oder Klimaverhältnisse auf. Anhand von aktuellen Zustandsgrößen zu Wetter- oder Klimaverhältnissen (z.B. Regen, Schneefall, Windstärke, Sonnenschein, Bewölkung, etc.) kann die Steuervorrichtung die oben beschriebene aktuelle Sicht abschätzen und diese wiedergeben oder nachahmen.

In einer bevorzugten Ausgestaltung der Erfindung weist die Beleuchtungseinrichtung mehrere Anzeigevorrichtungen auf, welche nebeneinander an einer Passagierkabinendecke eines Transportmittels anbringbar sind. In diesem Fall ist die Steuervorrichtung vorzugsweise zum Ansteuern der mehreren Anzeigevorrichtungen derart ausgestaltet, dass die mehreren Anzeigevorrichtungen eine zusammenhängende Darstellung entsprechend der aktuellen Sicht von dem Transportmittel nach oben anzeigen.

In einer weiteren bevorzugten Ausgestaltung der Erfindung ist die wenigstens eine Anzeigevorrichtung ausgewählt aus einer Gruppe von Anzeigevorrichtungen bestehend aus LED-Anzeigen, LCD-Anzeigen, Leuchtfolien-Anzeigen, Pigment-Flüssigkeits-Anzeigen, holografischen Anzeigen und Kombinationen daraus. In alternativen Ausführungsformen weist die wenigstens eine Anzeigevorrichtung eine Projektionsanzeige von vorne oder von hinten auf.

In einer noch weiteren bevorzugten Ausgestaltung der Erfindung weist die wenigstens eine Anzeigevorrichtung wenigstens eine Leuchtvorrichtung zum Beleuchten der Passagierkabine des Transportmittels auf. Die erfindungsgemäße Beleuchtungseinrichtung kann auf diese Weise an der Passagierkabine wahlweise, d.h. je nach aktuellem Bedarf, auch als Nutzbeleuchtung oder Signalbeleuchtung genutzt werden. Vorzugsweise kann die Beleuchtungseinrichtung während der Fahrt des Transportmittels in der oben beschriebenen erfindungsgemäßen Art benutzt werden, während sie in Zeitabschnitten zum Beispiel während eines Halts an einem Bahnhof als Nutzbeleuchtung eingesetzt wird, um das Ein- und Aussteigen für die Passagiere zu erleichtern.

Gegenstand der Erfindung ist auch ein Transportmittel, insbesondere ein Schienenfahrzeug, mit wenigstens einer Passagierkabine, an deren Decke wenigstens eine Beleuchtungseinrichtung gemäß der Erfindung montiert ist.

Gegenstand der Erfindung ist schließlich auch ein Verfahren zum Erzeugen einer Ambientebeleuchtung in einer Passagierkabine eines Transportmittels, bei welchem mittels wenigstens einer an einer Decke der Passagierkabine angebrachten Anzeigevorrichtung in Abhängigkeit von wenigstens einem Außenparameter in Bezug auf eine aktuelle Sicht von dem Transportmittel nach oben eine statische oder dynamische Darstellung entsprechend der aktuellen Sicht von dem Transportmittel nach oben angezeigt wird. Vorzugsweise wird zur Ausführung dieses Verfahrens eine oben erläuterte Beleuchtungseinrichtung gemäß der Erfindung verwendet.

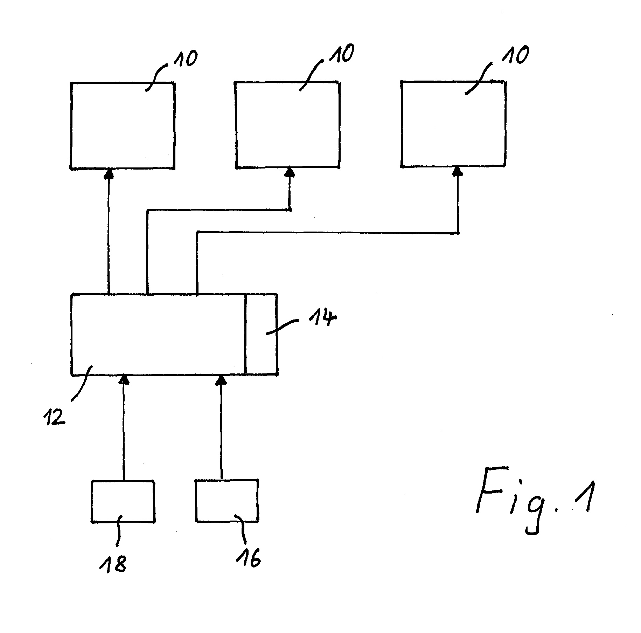

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnungen besser verständlich. Darin zeigt die einzige Figur 1 ein schematisches Blockschaltbild einer Beleuchtungseinrichtung gemäß einem Ausführungsbeispiel der Erfindung.

Die Erfindung wird nachfolgend am Beispiel einer Ambientebeleuchtung in einem Schienenfahrzeug näher erläutert, ohne dass die Erfindung auf diese spezielle Anwendung beschränkt sein soll.

Die in Figur 1 dargestellte Beleuchtungseinrichtung weist mehrere (hier drei) Anzeigevorrichtungen 10 auf. Bei den Anzeigevorrichtungen 10 handelt es sich um flächige, vorzugsweise um großflächige Anzeigevorrichtungen.

Je nach zum Beispiel gewünschter Dimensionierung der Anzeige, Form und Tragfähigkeit der Passagierkabinendecke, und dergleichen kommen für die Anzeigevorrichtungen 10 verschiedene Anzeigetechniken in Frage. So können die Anzeigevorrichtung zum Beispiel in LED-Technik oder in LCD-Technik realisiert werden, Leuchtfolien bzw. Elektrolumineszenzfolien aufweisen, eine Pigment-Flüssigkeit enthalten, und dergleichen. Außerdem sind Anzeigen mit holografischer Darstellungsweise und Projektionstechniken (von vorne oder von hinten) einsetzbar.

Die mehreren Anzeigevorrichtungen 10 verfügen jeweils über eine geeignete Befestigungseinrichtung (nicht dargestellt), mit der sie an einer Kabinendecke des Schienenfahrzeuges montiert werden können, vorzugsweise nebeneinander oder hintereinander, zum Beispiel oberhalb eines Mittelganges zwischen den seitlichen Sitzreihen. Auf den mehreren Anzeigevorrichtungen 10 kann bevorzugt ein zusammenhängendes Bild dargestellt werden, um eine entsprechend größere Darstellung zu erzielen. Die einzelnen Anzeigevorrichtungen 10 können dabei im Wesentlichen unmittelbar aneinander angrenzen oder voneinander beabstandet sein.

Die Anzeigevorrichtungen 10 können leicht gewölbt ausgebildet sein. Hierdurch ist ihre Form an die Form der Passagierkabinendecke angepasst, sodass sie ggf. einfacher an dieser montiert werden können, und die Anzeigevorrichtungen 10 erzeugen Darstellungen mit einer gewissen dreidimensionalen Wirkung.

Falls mehrere Passagierkabinen oder Passagierkabinenbereiche mit einer oder mehreren Anzeigevorrichtungen 10 ausgestattet sind, können diese wahlweise von einer gemeinsamen Steuervorrichtung 12 oder von separaten Steuervorrichtungen 12 angesteuert werden. Diese Steuervorrichtungen 12 steuern die Anzeigevorrichtungen 10 derart, dass diese den Passagieren eine statische oder dynamische Darstellung entsprechend der aktuellen Sicht von dem Schienenfahrzeug in Richtung im Wesentlichen nach oben gen Himmel präsentieren.

Zu diesem Zweck ist die Steuervorrichtung 12 mit einem Timer oder einer Zeiterfassung 14 ausgestattet, mit welcher die aktuelle Tageszeit und die aktuelle Jahreszeit erfasst werden können. Zusätzlich ist die Steuervorrichtung 12 mit vorzugsweise mehreren Sensoren 16 verbunden, welche beispielsweise auf dem Dach des Schienenfahrzeuges angeordnet sind, um aktuelle Wetter- und Klimaverhältnisse zu erfassen. Anhand der durch diese Erfassungseinrichtungen 14, 16 ermittelten Außenparameter kann die Steuervorrichtung 12 die aktuelle Helligkeit und das aktuelle Wetter bestimmen und so eine aktuelle Sicht vom Schienenfahrzeug nach oben nachahmen und den Passagieren präsentieren. Die Darstellung auf den Anzeigevorrichtungen stimmt damit im Wesentlichen mit der aktuellen Sicht aus den Seitenfenstern überein, selbst wenn sie nur nachgeahmt wird. So zeigen die Anzeigevorrichtungen 10 zum Beispiel an einem sonnigen Tag einen klaren Himmel, bei einer klaren Nacht einen Sternenhimmel, bei schlechtem Wetter zum Beispiel Regen- oder Schneeschauer.

Wie in Figur 1 dargestellt, ist die Steuervorrichtung 12 in diesem Ausführungsbeispiel zudem mit wenigstens einer Kamera 18 verbunden, die ebenfalls auf dem Dach des Schienenfahrzeuges montiert ist. Diese Kamera 18 dient als weitere Außenparameter-Erfassungseinrichtung im Sinne der Erfindung und kann vorzugsweise die Sicht nach oben in Echtzeit erfassen, die dann auch auf den Anzeigevorrichtungen 10 präsentiert wird. Die Erfassungseinrichtungen 14, 16 liefern in diesem Fall Außenparameter, mit denen die Steuervorrichtung 12 die durch die Kamera 18 erzeugte Darstellung ggf. korrigieren kann.

Wahlweise kann die Kamera 18 auch nur weitere Außenparameter bzw. Zustandsgrößen liefern, wie beispielsweise Helligkeit, Wetterverhältnisse, Tunneldurchfahrt, und dergleichen. Zusammen mit den anderen Außenparametern, die von den anderen Erfassungseinrichtungen 14, 16 erfasst werden, kann die Steuervorrichtung 12 ein realistisches aktuelles Bild der Sicht nach oben auf den Anzeigevorrichtungen 10 simulieren.

Obwohl nicht dargestellt, sind die Anzeigevorrichtungen 10 optional mit weiteren Leuchtvorrichtungen ausgestattet oder mit solchen kombiniert. Mit diesen Leuchtvorrichtungen kann bei Bedarf anstatt der oben beschriebenen Ambientebeleuchtung der Passagierkabine auch eine Nutzbeleuchtung oder Signal- oder Notbeleuchtung in der Passagierkabine erzeugt werden. Die Ansteuerung dieser zusätzlichen Leuchtvorrichtungen erfolgt ebenfalls über die Steuervorrichtung 12 der Anzeigevorrichtungen 10 oder zumindest mit dieser gekoppelt.

Beim Einsatz in einem Schienenfahrzeug können wahlweise nur einzelne oder alle Passagierkabinen mit einer solchen Beleuchtungseinrichtung ausgestattet sein. Besonders vorteilhaft werden die Beleuchtungseinrichtungen in Großraumkabinen von Schienenfahrzeugen, Flugzeugen, Omnibussen oder Schiffen eingesetzt, da sie dort ihre Wirkung als Ambientebeleuchtung optimal entfalten können. Auch können diese Beleuchtungseinrichtungen wahlweise je nach Bedarf ein- und ausgeschaltet werden.

## Patentansprüche

1. Beleuchtungseinrichtung für ein Transportmittel, insbesondere ein Schienenfahrzeug, mit wenigstens einer Anzeigevorrichtung (10), welche an einer Passagierkabinendecke des Transportmittels anbringbar ist, und einer Steuervorrichtung (12) zum Ansteuern der wenigstens einen Anzeigevorrichtung (10),
**dadurch gekennzeichnet, dass**
die Beleuchtungseinrichtung wenigstens eine Außenparameter-Erfassungseinrichtung (14, 16, 18) zum Erfassen wenigstens eines Außenparameters in Bezug auf eine aktuelle Sicht von dem Transportmittel nach oben aufweist; und
die Steuervorrichtung (12) die wenigstens eine Anzeigevorrichtung (10) in Abhängigkeit von dem wenigstens einen erfassten Außenparameter derart ansteuert, dass die wenigstens eine Anzeigevorrichtung (10) eine statische oder dynamische Darstellung entsprechend der aktuellen Sicht von dem Transportmittel nach oben anzeigt.

2. Beleuchtungseinrichtung nach Anspruch 1,
**dadurch gekennzeichnet, dass**
die wenigstens eine Außenparameter-Erfassungseinrichtung wenigstens eine Kamera (18) zum Erfassen eines aktuellen Bildes der Sicht von dem Transportmittel nach oben aufweist.

3. Beleuchtungseinrichtung nach Anspruch 1 oder 2,
**dadurch gekennzeichnet, dass**
die wenigstens eine Außenparameter-Erfassungseinrichtung wenigstens einen Detektor (14) zum Erfassen der aktuellen Tageszeit und/oder der aktuellen Jahreszeit aufweist.

4. Beleuchtungseinrichtung nach einem der vorhergehenden Ansprüche,
**dadurch gekennzeichnet, dass**
die wenigstens eine Außenparameter-Erfassungseinrichtung wenigstens einen Detektor (16) zum Erfassen der aktuellen Wetter- oder Klimaverhältnisse aufweist.

5. Beleuchtungseinrichtung nach einem der vorhergehenden Ansprüche,
**dadurch gekennzeichnet, dass**
sie mehrere Anzeigevorrichtungen (10) aufweist, welche nebeneinander an einer Passagierkabinendecke eines Transportmittels anbringbar sind; und die Steuervorrichtung (12) zum Ansteuern der mehreren Anzeigevorrichtungen (10) derart ausgestaltet ist, dass die mehreren Anzeigevorrichtungen eine zusammenhängende Darstellung entsprechend der aktuellen Sicht von dem Transportmittel nach oben anzeigen.

6. Beleuchtungseinrichtung nach einem der Ansprüche 1 bis 5,
**dadurch gekennzeichnet, dass**
die wenigstens eine Anzeigevorrichtung (10) ausgewählt ist aus einer Gruppe von Anzeigevorrichtungen bestehend aus LED-Anzeigen, LCD-Anzeigen, Leuchtfolien-Anzeigen, Pigment-Flüssigkeits-Anzeigen, holografischen Anzeigen und Kombinationen daraus.

7. Beleuchtungseinrichtung nach einem der Ansprüche 1 bis 5,
**dadurch gekennzeichnet, dass**
die wenigstens eine Anzeigevorrichtung (10) eine Projektionsanzeige von vorne oder von hinten aufweist.

8. Beleuchtungseinrichtung nach einem der vorhergehenden Ansprüche,
**dadurch gekennzeichnet, dass**
die wenigstens eine Anzeigevorrichtung (10) wenigstens eine Leuchtvorrichtung zum Beleuchten der Passagierkabine des Transportmittels aufweist.

9. Transportmittel, insbesondere Schienenfahrzeug, mit wenigstens einer Passagierkabine, an deren Decke wenigstens eine Beleuchtungseinrichtung nach einem der Ansprüche 1 bis 8 montiert ist.

10. Verfahren zum Erzeugen einer Ambientebeleuchtung in einer Passagierkabine eines Transportmittels, insbesondere eines Schienenfahrzeuges, bei welchem mittels wenigstens einer an einer Decke der Passagierkabine angebrachten Anzeigevorrichtung (10) in Abhängigkeit von wenigstens einem Außenparameter in Bezug auf eine aktuelle Sicht von dem Transportmittel nach oben eine statische oder dynamische Darstellung entsprechend der aktuellen Sicht von dem Transportmittel nach oben angezeigt wird.
